# EUROPÄISCHE PATENTANMELDUNG

(11) **EP 1 277 817 A1**
(43) Veröffentlichungstag der Anmeldung: **22.01.2003**
(21) Anmeldenummer: 02014387.1
(22) Anmeldetag: 28.06.2002
(51) Int. Cl.: C09J 4/00, C08F 220/14, C08F 220/32, C09J 4/06

(54) **Klebstoff auf Acrylatbasis, seine Verwendung und Verfahren zum Verbinden von zwei Gegenständen**

(30) Priorität: 20.07.2001 DE 10135529
(71) Anmelder: Forschungszentrum Karlsruhe GmbH, 76133 Karlsruhe (DE)
(72) Erfinder: Oskotski, Evgueni, Dr., 77799 Ortenberg (DE); Meyer, Pascal, Dr., 25960 Deluz (FR); Goldacker, Doris, 76344 Eggenstein-Leopoldshafen (DE); Hahn, Lothar, Dr., 76137 Karlsruhe (DE); Schulz, Joachim, Dr., 76137 Karlsruhe (DE)

(57) **Zusammenfassung**

Der Erfindung liegt die Aufgabe zugrunde, einen Klebstoff vorzuschlagen, der in der Mikrosystemtechnik einsetzbar ist. Er soll insbesondere in der Lage sein, Gegenstände aus Polymethylmethacrylat (PMMA) mit Silizium oder Metall zuverlässig und dauerhaft zu verbinden.

Erfindungsgemäß wird hierfür ein Klebstoff bestehend aus einer Lösung von Polymethylmethacrylat (PMMA) in Glycidylmethacrylat (GMA) und Monomethylmethacrylat (MMA) sowie einem radikalischen Starter vorgeschlagen. Der Klebstoff kann insbesondere für Verklebungen Verwendung finden, bei denen einer der Klebepartner aus PMMA besteht. Zur Herstellung einer Klebeverbindung wird der Klebstoff aufgetragen und die Polymerisation abgewartet.

## Beschreibung

Die Erfindung betrifft einen Klebstoff gemäß Anspruch 1, seine Verwendung gemäß Anspruch 7 und ein Verfahren zum Verbinden von zwei Gegenständen gemäß Anspruch 9.

Zweikomponenten-Klebstoffe, bei denen mittels einer zweiten Komponente, die einen radikalischen Starter enthält, eine Polymerisation in der ersten Komponente des Klebstoffs eingeleitet wird, sind seit langem bekannt.

Besondere Anforderungen an einen Klebstoff werden in der Mikrostrukturtechnik gestellt. Insbesondere für die Lithographie, vor allem die Röntgentiefenlithographie, wird nach einem Klebstoff gesucht, mit dessen Hilfe Gegenstände aus Polymethylmethacrylat unter Beibehaltung der lithographischen Eigenschaften auf glatten Substratoberflächen beispielsweise aus Silizium, etwa auf einem Silizium-Wafer, oder auf Metall-Oberflächen, etwa auf Formeinsatzgrundplatten, dauerhaft fixiert werden können.

Der Erfindung liegt die Aufgabe zugrunde, einen Klebstoff vorzuschlagen, der für diesen Zweck einsetzbar ist. Er soll insbesondere in der Lage sein, Gegenstände aus Polymethylmethacrylat (PMMA) mit Silizium oder Metall in der Weise zu verbinden, dass nachfolgende weitere Schritte im Verlauf von mikrostrukturtechnischen Verfahren, wie z. B. die Röntgentiefenlithographie, die Galvanoformung oder die mechanische Abformung, möglich sind, ohne dass die Verbindungsstelle wieder aufbricht. Weiterhin soll ein Klebeverfahren vorgeschlagen werden.

Die Aufgabe wird gelöst durch den in Anspruch 1 beschriebenen Klebstoff, dessen Verwendung gemäß Anspruch 7 und das in Anspruch 9 angegebene Verfahren.

Der erfindungsgemäße Klebstoff enthält eine Lösung aus festem PMMA in monomerem Methylmethacrylat (MMA) und Glycidylmethacrylat (GMA) als Lösungsmittel. Die chemische Formel von GMA ist nachstehend wiedergegeben:

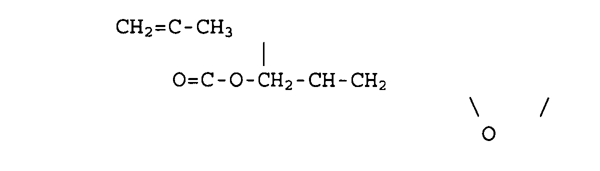

Vorzugsweise enthält die Lösung 10 bis 20 Gew.-% PMMA, 10 bis 50 Gew.-% GMA und 30 bis 80 Gew.-% MMA. Der MMA-Anteil kann teilweise durch Butylacrylat (BA) ersetzt werden, so dass anstatt einer entsprechenden Menge von MMA bis zu 20 Gew.-%, vorzugsweise 0,5 bis 20 Gew.-%, BA vorliegen. Die Lösung kann außerdem Trimethoxyproylmethacrylat (MEMO) enthalten. In diesem Fall wird MEMO in einer Menge von bis zu 3 Gew.-%, bezogen auf das Gesamtgewicht der Lösung aus PMMA, GMA, MMA und ggf. BA eingesetzt. BA bewirkt eine Verminderung der inneren Spannungen des ausgehärteten Klebstoffs und senkt dadurch die Gefahr von Spannungsrissen. Durch MEMO ergibt sich bei der Klebung auf glatten Siliziumoberflächen eine bessere Benetzung und damit ein gleichmäßigerer Klebefilm.

Als weiterer Bestandteil des Klebstoffs wird ein radikalischer Starter für die Polymerisierung der Lösung, insbesondere für die Polymerisierung von MMA und GMA, verwendet. Als Starter eignet sich insbesondere Benzoylperoxid (BPO), obwohl auch andere an sich bekannte radikalische Starter wie z. B. Diazoisobutyronitril einsetzbar sind. Gemische aus PMMA, GMA, MMA, ggf. BA und MEMO sowie dem radikalischen Starter BPO werden bevorzugt bei höheren Temperaturen, etwa oberhalb von 70°C, ausgehärtet. Soll eine Aushärtung des Klebstoffs bei niedrigeren Temperaturen, insbesondere bei Zimmertemperatur, stattfinden, empfiehlt es sich, anschließend an die Zugabe des BPO zu der Lösung außerdem N,N-Dimethylanilin (DMA) als Katalysator für die Polymerisation hinzuzufügen. Der radikalische Starter BPO und der Katalysator DMA werden vorzugsweise in einer Menge von 1,5 (BPO) bzw. 1.0 Gew.-% (DMA), jeweils bezogen auf das Gesamtgewicht der Lösung aus PMMA in GMA, MMA und ggf. BA, eingesetzt.

Die Herstellung des Klebstoffs erfolgt am einfachsten durch Auflösen einer entsprechenden Menge von festem, pulverförmigem PMMA in einem Flüssigkeitsgemisch aus GMA, MMA und, soweit gewünscht, BA und MEMO. Wird als radikalischer Starter BPO verwendet, kann dieser Lösung der BPO-Anteil auch schon längere Zeit vor der Klebung zugemischt werden. Die Lösung muss dann allerdings bei niedrigen Temperaturen, vorzugsweise bei Temperaturen unterhalb von 5°C, und im Dunkeln in einem Kühl- oder Gefrierschrank aufbewahrt werden. Die Lagerzeit beträgt unter diesen Bedingungen ohne wesentliche Qualitätseinbuße etwa einen Monat. Wird diese Ausführungsform des Klebstoffs eingesetzt, so sollen die durch den Klebstoff verbundenen Gegenstände nach der Klebung bevorzugt auf Temperaturen von mindestens 60°C, bevorzugt auf 70° bis 80°C, erwärmt werden.

Eine längere Lagerfähigkeit des Klebstoffs ergibt sich, wenn der BPO-Anteil separat von der Lösung aus PMMA in GMA, MMA sowie ggf. BA und MEMO aufbewahrt wird. Der BPO-Anteil wird dann unmittelbar vor der Klebung hinzugefügt.

Zur Klebung von temperaturempfindlichen Stoffen, die nicht über Zimmertemperatur erwärmt werden sollen, wird dem Klebstoff DMA als Katalysator hinzugefügt. DMA kann der Lösung aus PMMA in GMA, MMA, ggf. BA sowie dem radikalischen Starter BPO hinzugefügt werden. Bei dieser Ausführungsform entspricht das Klebeverfahren der Anwendung eines Zweikomponenten-Klebstoffs.

Alternativ können die Komponenten (i) Lösung aus PMMA in GMA, MMA sowie ggf. BA und MEMO, (ii) BPO und (iii) DMA separat aufbewahrt und unmittelbar vor der Klebung in der Reihenfolge (i), (ii) und (iii) gemischt werden. Die Anteile (ii) BPO und (iii) DMA dürfen dabei nicht unmittelbar miteinander in Kontakt gebracht werden. Der DMA-Anteil bewirkt durch Katalyse eine erheblich schnellere Polymerisation, so dass feste und zuverlässige Klebungen auch bei Zimmertemperatur realisiert werden können.

Die Dicke des Klebstoff-Films kann zwischen 5 und 50 µm betragen. Für besonders feste Klebungen wird - unabhängig von der Ausführungsform des erfindungsgemäßen Klebstoffs - die Klebestelle im Anschluss an die Klebung für 20 bis 120 Minuten bei Zimmertemperatur und anschließend für 90 bis 150 Minuten bei 60°C bis 80°C gehalten.

Im Vergleich zu einem Klebstoff, bei dem in der ersten Komponente auf den Bestandteil GMA verzichtet wird (im folgenden Standard-Klebstoff genannt), erbringt der erfindungsgemäße Klebstoff in allen für die Mikrostrukturtechnik relevanten Anwendungsgebieten erheblich bessere Ergebnisse. Beim Verbinden von Plexiglas®, einem als Röntgenresist geeigneten PMMA, mit der Oberfläche eines Siliziumwafers waren mit dem Standard-Klebstoff Ausschussraten von mehr als 70 % zu verzeichnen. Die Ausschussrate beim erfindungsgemäßen Klebstoff liegt dagegen bei allen Ausführungsformen unterhalb von 10 %. Die Zugfestigkeit der Klebung ist bei Verwendung des erfindungsgemäßen Klebstoffs wesentlich erhöht; deshalb haften auch kleine Strukturen, die durch lithographische Verfahrensschritte erzeugt werden, gut auf ihrer Unterlage. Auch die Lagerfähigkeit geklebter Proben ist erfindungsgemäß deutlich besser.

Besonders vorteilhaft ist, dass sich der abgebundene Klebstoff unter Bestrahlung mit Röntgenstrahlung wie reines PMMA verhält und mit demselben Entwickler weiterverarbeitet werden kann. Die Epoxygruppe des Glycidylmethacrylat stört die Direktlithographie nicht, so dass unabhängig von einer Klebestelle die Lithographie wie üblich ausgeführt werden kann.

Mit dem erfindungsgemäßen Klebstoff lassen sich insbesondere Gegenstände aus PMMA mit Gegenständen aus Silizium, Metallen wie Gold oder Titan, Glas und Keramiken verbinden. Die Klebung von Gegenständen aus PMMA auf Silizium-Wafer ist in der Mikrosystemtechnik von besonderer Bedeutung. Der Klebstoff könnte jedoch auch in der Dentaltechnik, insbesondere zur Fixierung von Verblendmaterial oder von Inlays aus Kunststoff, Keramik oder Metall in der Kavität des Restzahns, Verwendung finden.

Die Erfindung wird im folgenden anhand von Ausführungsbeispielen näher erläutert.

Zwei Plättchen aus PMMA mit einem Durchmesser von 20 mm wurden mit jeweils einem Wafer aus Silizium verklebt.

Für die Klebung des ersten Plättchens mit einer ersten Ausführungsform des erfindungsgemäßen Klebstoffs wurde eine Lösung von 15 Gew.-% PMMA in 55 Gew.-% MMA und 30 Gew.-% GMA angesetzt. Der Lösung wurde MEMO (3 Gew.-%), ein Starter bestehend aus BPO (1,5 Gew.-% ) und DMA (1,0 Gew.-%) als Katalysator hinzugefügt. Die Anteile von MEMO, BPO und DMA sind auf das Gesamtgewicht der Lösung bezogen. Die geklebten Teile wurden nach dem Kleben für 90 min bei Zimmertemperatur und anschließend für 120 min bei 70°C gehalten.

Mit diesem Klebstoff ergab sich eine Zugfestigkeit von 6,0 MPa.

Das zweite Plättchen wurde mit einer zweiten Ausführungsform des erfindungsgemäßen Klebstoffs auf den Silizium-Wafer geklebt, bei der 10 Gew.-% des MMA-Gehaltes durch BA ersetzt wurden. Wiederum wurden die geklebten Teile für 90 min bei Zimmertemperatur und anschließend für 120 min bei 70°C gehalten.

Mit diesem Klebstoff steigerte sich die Zugfestigkeit auf 7,3 MPa.

Mit dem oben erwähnten Standard-Klebstoff wurde zum Vergleich ein weiteres, identisch gestaltetes Plättchen aus PMMA mit einem gleichen Wafer verklebt.

Hierbei ergab sich eine Zugfestigkeit von lediglich 0,9 MPa.

Es zeigte sich, dass beide Ansätze des Klebstoffs gegen Scherspannungen sehr unempfindlich waren, so dass die geklebten Plättchen sogar auf eine geringere Dicke gefräst werden konnten, ohne dass die Klebung versagte.

Die Proben wurden anschließend mit Röntgenstrahlung partiell bestrahlt und die bestrahlten Bereiche des PMMA durch einen Entwickler bestehend aus 60 vol.-% Diethylenglycolmonobutylether, 20 vol.-% Morfolin, 15 vol.-% destilliertes Wasser und 5 vol.-% Ethanolamin herausgelöst. Es zeigte sich, dass mit dem alten Kleber eine Mindestgröße der auf lithographischem Weg hergestellten Fingerstrukturen von 300 µm Höhe, 30 µm Breite und 300 µm Länge eingehalten werden musste, damit eine 100 %-ige Fixierung aller Strukturen gewährleistet werden konnte. Mit den beiden Ansätzen des neuen Klebstoffs konnte eine zuverlässige Fixierung von Fingerstrukturen bis herunter zu 300 µm Höhe, 15 µm Breite und 150 µm Länge garantiert werden.

## Patentansprüche

1. Klebstoff bestehend aus
- einer Lösung von Polymethylmethacrylat (PMMA) in Glycidylmethacrylat (GMA) und Monomethylmethacrylat (MMA) sowie
- einem radikalischen Starter.

2. Klebstoff nach Anspruch 1,
bei dem die Lösung aus 10 bis 20 Gew.-% PMMA, 10 bis 50 Gew.-% GMA und 30 bis 80 Gew.-% MMA besteht.

3. Klebstoff nach Anspruch 1 oder 2, bei dem 0,5 bis 20 Gew.-% des MMA durch Butylacrylat (BA) ersetzt ist.

4. Klebstoff nach einem der Ansprüche 1 bis 3, bei dem zusätzlich Trimethoxysilylpropylmethacrylat (MEMO) in einer Menge von bis zu 3 Gew.-%, bezogen auf die Gesamtmenge von PMMA, GMA, MMA und ggf. BA, zugemischt ist.

5. Klebstoff einem der Ansprüche 1 bis 4, bei dem der radikalische Starter Benzoylperoxid (BPO) darstellt.

6. Klebstoff nach Anspruch 5, bei dem N,N-Dimethylanilin (DMA) als separate zweite Komponente vorhanden ist.

7. Verwendung des Klebstoffs nach einem der Ansprüche 1 bis 6 zum Verbinden zweier Gegenstände, wobei einer der Gegenstände aus Polymethylmethacrylat besteht.

8. Verwendung des Klebstoffs nach Anspruch 7, wobei der andere Gegenstand aus Silizium, einem Metall, Glas oder einer Keramik besteht.

9. Verfahren zum Verkleben von zwei Gegenständen, bei dem
auf mindestens einen der beiden Gegenstände an der zu verbindenden Stelle der Klebstoff gemäß einem der Ansprüche 1 bis 5 aufgetragen und die Polymerisation abgewartet wird.

10. Verfahren nach Anspruch 9, bei dem
unmittelbar vor dem Verkleben dem Klebstoff gemäß einem der Ansprüche 1 bis 5 DMA zugemischt wird.
